# EUROPEAN PATENT APPLICATION

(11) **EP 1 737 218 A2**
(43) Date of publication of application: **27.12.2006**
(21) Application number: 06114483.8
(22) Date of filing: 24.05.2006
(51) Int. Cl.: H04N 5/335

(54) **System for adjusting a reference voltage in a photosensor chip**

(30) Priority: 22.06.2005 US 158571
(71) Applicant: Xerox Corporation, Rochester, New York 14644 (US)
(72) Inventor: Tewinkle, Scott L., Ontario, NY 14519 (US); Hosier, Paul A., Rochester, NY 14612 (US)
(74) Representative: Grünecker, Kinkeldey, Stockmair & Schwanhäusser Anwaltssozietät

(57) **Abstract**

In an imaging apparatus such as a scanner or digital camera, a plurality of photosensors read image data onto a video line. The video line is periodically associated with a correction signal of predetermined magnitude, such as on a correction capacitor on the video line. A digital-analog converter (DAC) precisely adjusts the correction signal, to make consistent the video outputs of different subsets of photosensors on a chip, or of different photosensor chips reading onto a single video line.

## Description

The present disclosure relates to image sensor arrays used in raster input scanners or digital cameras.

Image sensor arrays typically comprise a linear array of photosensors which raster scan an image bearing document and convert light from the image areas viewed by each photosensor to image signal charges. Following an integration period, the image signal charges are amplified and transferred as an analog video signal to a common output line or bus through successively actuated multiplexing transistors.

For high-performance image sensor arrays, a preferred design includes an array of photosensors of a width comparable to the width of a page being scanned, to permit one-to-one imaging without reductive optics. In order to provide such a "full-width" array, relatively large silicon structures must be used to define the large number of photosensors. A preferred technique to create such a large array is to make the array out of several butted silicon chips. In one proposed design, an array is intended to be made of 20 silicon chips, butted end-to-end, each chip having 248 active photosensors spaced at 400 photosensors per inch.

Photosensitive devices may be one-dimensional or two-dimensional, and can be either of the "active" variety, wherein the photosensors output voltage signals, or in the form of a charge-coupled device, or CCD, which outputs a sequence of charges from a series of individual photosensors. In all of these various types of photosensitive devices, a common design feature is the use of "dark" photosensors, which are used to periodically reset the offset voltage for the photosensors being read out. These dark photosensors are of the same semiconductor structure as the other "active" photosensors on each chip, but the dark photosensors are not exposed to light. In most designs, the dark photosensors are provided with an opaque shield, such as of aluminum or silicon, to prevent the influence of light thereon. In the scanning process, with each readout cycle of active photosensors on each chip, the readout of the first photosensor is proceeded by readouts of one or more dark photosensors, which are used to reset the voltage offset associated with the whole chip, and thereby correct signal drift when the active photosensors are reading out their signals. In other words, the readout of a dark photosensor with each scan can serve as a reference offset or "zero point" so that the absolute values of light intensity on the active photosensors may be determined. The use of a dark photosensor output when reading out signals from active photosensors can significantly compensate for performance variations of multiple chips in a single apparatus, and also for changes in the performance of a photosensitive device over time.

US Patent 5,654,755 describes a circuit for correcting the offset of the video output of a set of active photosensors, based on the output of dark photosensors. An averaging RC circuit in parallel with the video line accumulates an average signal based on a large number of readings from the dark photosensors. The average signal is periodically clamped to a correction capacitor in series on the video line, the charged correction capacitor adjusting the offset on the active-photosensor signals that subsequently pass through the video line. Another related system is shown in US Patent 6,657,662.

According to one aspect, there is provided an imaging apparatus comprising a video output line, at least a first plurality of photosensors adapted to output signals onto the video output line, and a voltage source. A DAC adjusts a voltage from the voltage source to associate a reference signal of a predetermined magnitude with the video output line.

According to another aspect, there is provided an imaging apparatus comprising a video output line; a first chip and a second chip, each chip including a plurality of photosensors adapted to output signals onto the video output line; and a voltage source. A DAC adjusts a voltage from the voltage source to associate a reference signal of a predetermined magnitude with the video output line.

Figure 1 is a plan view of the relevant portions of an active photosensitive device having dark photosensors and active photosensors reading to a common video line.

Figure 2 is a schematic of a simple circuit for causing dark photosensor signals to determine an offset for subsequent active photosensor video signals.

Figure 3 is a simplified schematic view of a subsystem on an imaging chip, for providing a reference voltage of a precise predetermined magnitude for a video output.

Figure 4 is a simplified plan view of a portion of a "full-width-array" input scanner as would be used in office equipment such as a digital copier.

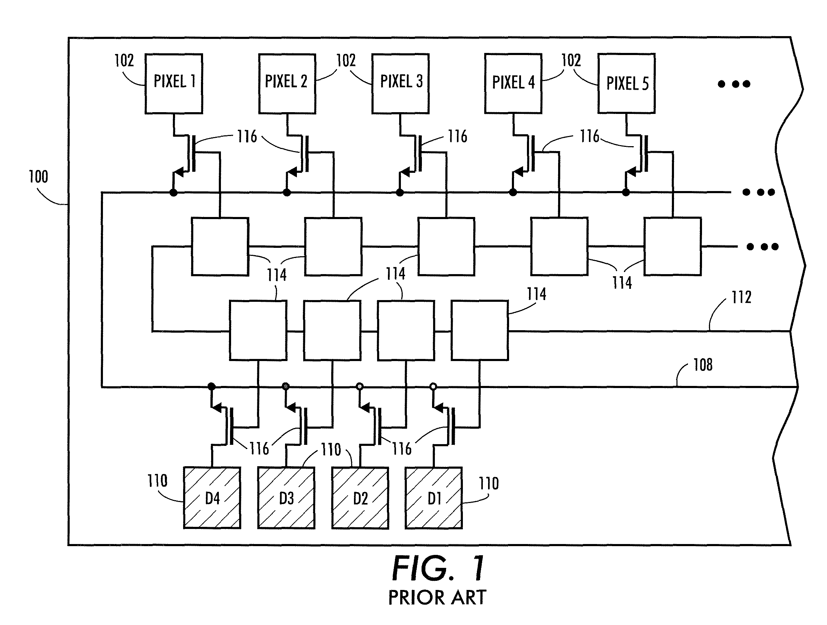

Figure 1 is a simplified plan view showing a configuration of photosensors on a single photosensor chip 100. Such a chip would be found, for example, in a raster input scanner having a linear array of photosensors, as would be used, for example, in a digital copier or scanner. As is well known, an original hardcopy image is moved relative to the chip, so that each individual photosensor on the chip is exposed to a sequence of small areas on the original image. A typical raster input scanner may include a single chip which, in combination with reduction optics, is exposed to an entire width of a page being scanned; or alternately could include a plurality of such chips, butted end-to-end, which together form a single page-width linear array of photosensors.

In the plan view of Figure 1, there is shown a long array of active (i.e., photosensitive) photosensors 102 which share a common video line 108 with a plurality of "dark photosensor" photosensors 110, which are individually indicated as D1-D4. Also associated with the photosensors 102 and 110 is a shift register line 112 that connects a series of shift register select switches 114. The shift register select switches 114 have associated therewith a series of transistor switches 116. When each transistor switch 116 is activated, the transistor switch permits the charge from its associated individual photosensor 102 or 110 to be readout through the switch 116 onto the common video line 108. There is thus run through the line of shift register switches 114 on line 112 digital information in the form of a string of 0's with a single "1" therein. As the string of digits moves through the shift register switches 114 along line 112, the single "1" activates the photosensors in a sequence as it moves down the input line 112, thereby causing the photosensors 108 and 102 to output the signals thereon, in order, onto video line 108.

In the particular design of Figure 1, the first photosensors to be activated with each scan are the dark photosensors 110, followed by the active photosensors 102. As mentioned above, the dark photosensors 110 are typically of the same general structure as the active photosensors 102, except that they are not exposed to light in any way. Typically, the dark photosensors 110 are shielded from light, such as with a layer of aluminum. Because both the dark photosensor photosensors 110 and active photosensors 102 are created in the same chip, they will be as physically similar as possible, so that any systemic process variation of the active photosensors 102 will be equally apparent in the dark photosensors 110. In this way, with each scan of video signals the dark photosensors in effect recalibrate the chip by establishing a video signal consistent with no light impinging on a photosensor. Once this offset is determined, systemic errors in the outputs of the active photosensors can be compensated for.

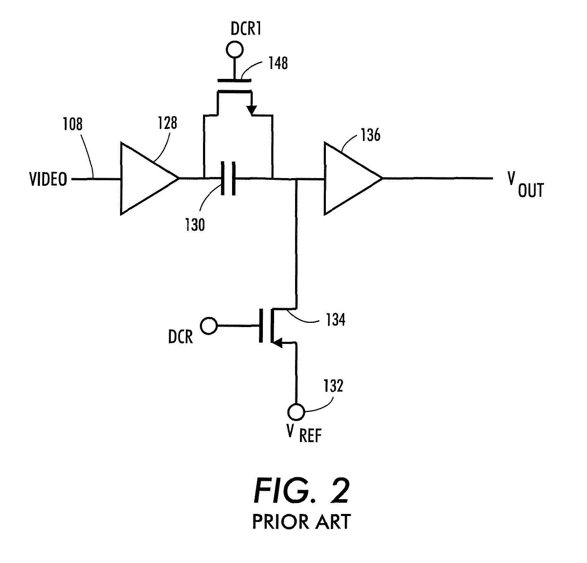

A simple apparatus for carrying out the operation of causing the dark photosensors to determine the offset for the active photosensor which are subsequently read out on video line 108 is shown in Figure 2. The "offset correction device" circuit shown in Figure 2 is intended to be immediately downstream of the active photosensors on video line 108. Following passage through a unity-gain amplifier 128, there is provided on video line 108 a capacitor 130, which will specifically be referred to as "correction capacitor" 130. Correction capacitor 130 retains a charge thereon which influences the magnitude of voltage signals from active photosensors that are read out through video line 108. Because of the relatively high speeds of reading out active photosensors with each scan, the charge on correction capacitor 130 will remain reasonably constant through every readout sequence. In order to place an original charge on correction capacitor 130, that is, a charge on correction capacitor 130 which will influence the magnitude of voltage signals in a desirable manner, the correction charge on correction capacitor 130 is fixed with every scan when the dark photosensors 116 are read through video line 108.

In a typical embodiment of a chip such as 100 with four dark photosensors 110, the selection of four dark photosensors is mandated mainly by standard engineering practice; typically, only one such dark photosensor, such as dark photosensor D3, is used to determine the offset for the subsequent readout of active photosensors. At the beginning of each readout, when it is the turn of dark photosensor D3 to output its dark photosensor signal onto video line 108, a reference voltage, from a source 132 in parallel to the video line 108, is activated, such as through a switch 134. The output of the dark photosensor D3 of dark photosensors 110, simultaneous with the application of reference voltage V_{REF} on the other side of correction capacitor 130, has the effect of placing on correction capacitor 130 a charge, referred to as the "correction charge," representative of both the dark photosensor signal and V_{REF}. (φ_{DCR} and φ_{DCR1} are other voltages, typically in the form of square waves, which operate the switches 134 and 148.) There may also be other circuits along video line 108, which are here summarized as the influence of an extra unity gain amplifier, indicated as 136.

The chip 100 shown in Figures 1 and 2, and the methods of operation that can be carried out therewith, are here described as one example of an imaging apparatus in which, at various times, a reference voltage of a predetermined magnitude is placed on the correction capacitor 130 on a video line 108. Other designs and operational principles, some using dark photosensors and some not, some using a correction capacitor and some not, are known. In some possible designs, the reference voltage is not placed directly on a correction capacitor but merely associated with the video line in some way; in some possible designs, the correction capacitor is not directly connected to the video line but is merely associated with the video line in some way. Regardless of the specific arrangement relative to the video line, it is desirable that a reference voltage associated with the video line be of a precise predetermined magnitude. In a practical imaging chip, a source voltage available to subsystems on the chip may not be of a sufficiently precise magnitude to enable a consistent image signal on the video line.

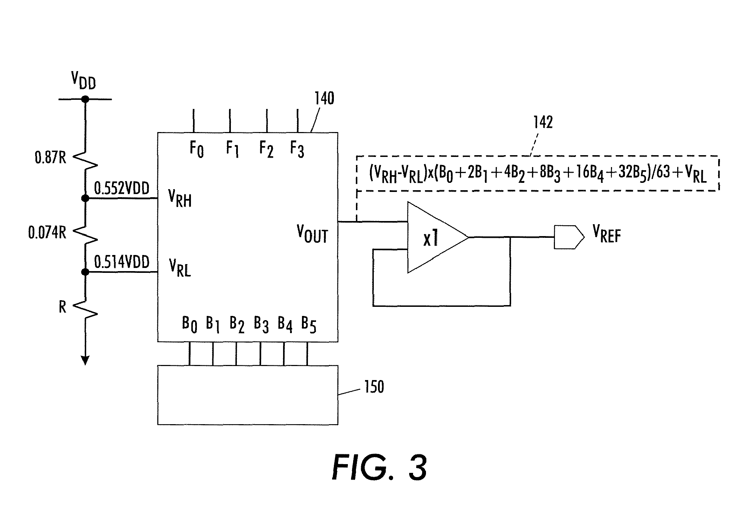

Figure 3 is a simplified schematic view of a subsystem on an imaging chip, for providing a reference voltage of a precise predetermined magnitude for a video output. A basic source voltage V_{DD} is generally available on the chip. As shown, this voltage can be tapped from two nodes, to obtain two different voltages, here 0.552 and 0.514 of V_{DD}. These two voltages can be considered the high end V_{RH} or low end V_{RL} of a useable range of voltage from which the reference voltage can be derived. In an alternative design, the values of V_{RH} and V_{RL} can themselves be made variable, through a control interface on chip 100, relative to an original voltage source on the chip. (As used herein, the term "voltage source" means any set of elements that have the effect of providing a voltage to any circuitry on a chip, and may include on-chip or off-chip elements.)

The two voltages are entered into a digital-analog converter or DAC, here indicated as 140, which is typically disposed on a chip 100. Another input into DAC 140 is a set of binary inputs (in this case 6-bit, but other designs are possible) 8₀-8₅. These inputs are used to adjust the voltage output by DAC 140, V_{OUT}, to some level between V_{RH} and V_{RL}, such as shown as algorithm 142 in Figure 3. V_{OUT} is then used to derive the reference voltage V_{REF} used in the output line of the chip. In this way, once a chip such as 100 is installed in a larger apparatus such as a digital camera or copier, values can be entered into inputs B₀-B₅ to adjust the magnitude of V_{REF}, such as to obtain a desired quality of output image data, or to make the output of one chip such as 100 consistent with, for instance, another chip within the apparatus. Control system 150, which can include aspects in software or hardware on or off a chip 100, can be used to load desired values onto B₀-B₅ at a particular time, either once upon manufacture of the larger apparatus such as scanner or camera or to provide different values over time.

In a chip or other imaging apparatus having a plurality of largely independently-controllable subsets of photosensors 102, such as for differently-color-filtered photosensors, or subsets of photosensors programmed to have different integration times, it may be desirable to provide slightly different values of V_{REF} for each subset as it is read out through a common video line 108. The DAC 140 can be controlled or programmed to provide a different V_{OUT} depending on which subset of photosensors is being read out through the video line 108 at a given time. One possible approach would be to load into a cycle of different values into B₀-B₅ over time corresponding to the cycle in which different subsets of photosensors are read out through video line 108. The interaction between what subset of photosensors 102 are being read out at a given time and what values should be placed on B₀-B₅ in response thereto can be carried out via control system 150.

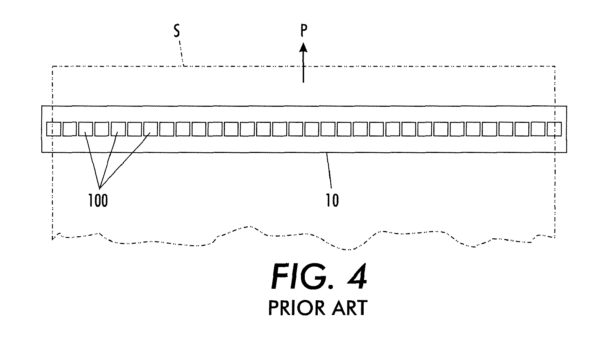

Figure 4 is a plan view of a portion of a "full-width-array" input scanner as would be used in office equipment such as a digital copier. A set of photosensor chips, each indicated as 100, is arranged on a circuit board 10. Each chip 100 includes a set of photosensors and ancillary circuitry for readout, such as described with regard to Figure 1 above. Together, the chips 100 on board 10 form one or more arrays of collinear photosensors that extend a length comparable to the width of an image-bearing sheet such as S effectively moving in a process direction P. The sheet S can move relative to the board 10 by being placed on a platen (not shown) relative to which the board 10 moves; or the sheet S can be fed through a document handler (not shown). As the sheet S moves past board 10, a series of small areas on the sheet S reflect light (from a source, not shown) into photosensors on the chips 100. The chips 100 receive the reflected light from sheet S and output image signals for subsequent recording and processing.

In a multi-chip imaging apparatus such as shown in Figure 4, a common architecture includes a plurality, or all, of the chips 100 reading out to a single common video out line, such as 108 in Figure 1 above. Because every chip 100 can be slightly different due to manufacturing tolerances, it is possible that every individual chip 100 on a board such as 10 may require an adjustment to its V_{REF} (or a set of values of V_{REF}, for different subsets of photosensors on each chip 100) to obtain a constant value of image signals from each chip 100 feeding video onto the common video line. To accomplish this, one approach would be to adjust the values B₀-B₅ for each chip 100 in a set, such as in response to a calibration procedure. Such a calibration procedure can be carried out through a control system 150 in Figure 3, the control system 10 possibly having aspects residing on or off any particular chip 100 in an apparatus.

Another possible input to a control system such as 150, whether the control system 150 operates a single chip 100 or a set of them, is the temperature of the chip (as would be measured by a thermometer, not shown, associated with the control system 150). It is possible that increasing heat, such as associated with an illumination lamp, may affect the performance characteristics of the chip, and a programmed change in V_{REF} may be useful in compensating for temperature-induced changes.

More generally, it may be desirable to recalibrate V_{REF} for one or more chips 100 on a regular or periodic basis, such as at each power-up of a scanner. In such a case, a value of a voltage V_{REF} can be directly measured from a chip, or inferred from the measured voltage on a video line 108; values of B₀-B₅ for a chip 100 or each chip 100 in a set can then be adjusted to obtain a desired performance.

Another set of inputs into DAC 140 is in the form of input lines F₀-F₃. These lines are used to identify which register in the chip will be loaded with the values B₀-B₅. The DAC register address in one embodiment is 0101 for F₃-F₀.

The claims, as originally presented and as they may be amended, encompass variations, alternatives, modifications, improvements, equivalents, and substantial equivalents of the embodiments and teachings disclosed herein, including those that are presently unforeseen or unappreciated, and that, for example, may arise from applicants/patentees and others.

In the following, additional preferred embodiments are described:
According to a preferred embodiment of the apparatus, the control system is responsive to which of the first chip and second chip is reading image data through the video line.
According to a further preferred embodiment of the apparatus, a plurality of photosensors on the first chip is collinear with a plurality of photosensors on the second chip.

## Claims

1. An imaging apparatus comprising:
a video output line;
at least a first plurality of photosensors adapted to output signals onto the video output line;
a voltage source; and
a DAC for adjusting a voltage from the voltage source to associate a reference signal of a predetermined magnitude with the video output line.

2. The apparatus of claim 1, further comprising:
a correction capacitor associated with the video output line; wherein
the reference signal is associated with the correction capacitor, and
the reference signal is periodically placed on the correction capacitor.

3. The apparatus of claim 1, wherein the DAC includes at least one input line for selecting a magnitude of an output from the DAC.

4. The apparatus of claim 1, further comprising:
a control system operative of the at least one input line of the DAC, and being responsive to a measured temperature.

5. The apparatus of claim 4, further comprising:
a second plurality of photosensors adapted to output signals onto the video output line; and
the control system being responsive to which of the first plurality of photosensors and second plurality of photosensors is being read through the video line.

6. An imaging apparatus comprising:
a video output line;
a first chip and a second chip, each chip including a plurality of photosensors adapted to output signals onto the video output line;
a voltage source; and
a DAC for adjusting a voltage from the voltage source to associate a reference signal of a predetermined magnitude with the video output line.

7. The apparatus of claim 6, wherein the first chip includes a first voltage source and the second chip includes a second voltage source, and
the first chip includes a first DAC and the second chip includes a second DAC.

8. The apparatus of claim 6, further comprising
at least one correction capacitor associated with the video output line; and wherein the reference signal is associated with the correction capacitor, or
is periodically placed on the correction capacitor.

9. The apparatus of claim 6, wherein the first chip includes a first correction capacitor and the second chip includes a second correction capacitor.

10. The apparatus of claim 6, the DAC on each chip including at least one input line for selecting a magnitude of an output from the DAC, and
further comprising a control system operative of the at least one input line of the DAC.
